# EUROPEAN PATENT SPECIFICATION

(11) **EP 0 900 718 B1**
(45) Date of publication and mention of the grant of the patent: **04.08.2004**
(21) Application number: 98202931.6
(22) Date of filing: 02.09.1998
(51) Int. Cl.: B62D 33/06

(54) **Harvester cab roof**
Kabinendach für Getreide- Mähdrescher
Toit de cabine pour moissoneuse-batteuse

(30) Priority: 09.09.1997 US 926001
(43) Date of publication of application: 10.03.1999
(73) Proprietor: CNH Belgium N.V., 8210 Zedelgem (BE)
(72) Inventor: Stauffer, David B., 1410 Waterloo (BE); Strong, Russel W., Craftsbury Common, VT 05827 (US)
(74) Representative: Vandenbroucke, Alberic

(56) References cited:
- EP-A- 0 608 422
- EP-A- 0 733 503
- DE-U- 9 001 249
- US-A- 4 185 867
- US-A- 4 503 749

## Description

This invention relates to the improvement of an agricultural harvester. More specifically it relates to an improvement of the cab roof of a harvester.

Mechanical harvesting of grain has taken place for decades. However, efforts continue in the attempt to make harvesting operations more efficient and effective. A combine harvester generally includes a header which cuts the crop. The header then moves the cut crop into a feeder house, which lifts the cut crop into the threshing and separation areas of the combine harvester. The grain is separated from the stalk by a rotor of a threshing system. The grain is then moved and stored in a grain tank. The chaff and trash are deposited from the rear of the combine harvester. An operator usually runs these various operations from a glass-enclosed cab. Typically, the cab is located above and behind the header. Because modern farming operations require that the combine operator be present in the cab for extended periods of time, the effort to improve the cab has been considerable. Conventional cabs are large glass-enclosed structures with one or two seats. There is a variety of lights for observing the farming operations during the night. Also in proximity to the cab are several mirrors for viewing the rear and sides of the combine harvester. The placement of lights on a combine harvester represents a great challenge. Due to the vibration created by the various threshing systems, keeping lights and mirrors dampened is difficult. It is also desirable for the operator to easily reach the adjustable lights and mirrors. Because of the long hours spent operating the combine harvester, also environment control systems have grown in importance. Most combine cabs have some form of heating, ventilation and air conditioning (HVAC) system. Some cab designs place the HVAC units in the roof. This location sometimes results in condensation dripping into the cab. Sometimes the unit is placed above or outside the cab. This makes maintenance complicated. It is also difficult to efficiently assemble a cab roof. Typically, the interior side of the cab roof is assembled and placed in the cab. After the interior is placed in the cab, a worker must then continue to affix the various electrical components and ducting while standing on ladders outside the cab. Such operation is complicated, tiring, time-consuming and expensive. Frequently, during the life of the combine harvester, if maintenance is required on the cab roof, a worker must either open or remove the cab roof or climb onto the exterior of cab. This is either dangerous for the worker or damaging to the seal between the roof and cab.

The prior art illustrates these and other drawbacks. US-A-4,140,047 discloses a mobile cab with air filter. In order to reach the fresh air filter, a worker must climb outside the cab to a precarious position.

US-A-4,185,867 discloses a harvester with a laterally extending visor structure. This visor structure does not permit a worker to easily assemble or maintain any of the systems with the cab.

US-A-4,503,749 discloses a harvester according to the preamble of claim 1 which has a combine visor with environmental components. This cab roof comprises a left and a right wing extending beyond the side walls of the cab. Field lights and mirrors are mounted in recesses in the wing sections. In order to prevent excessive vibrations of the light beams and the mirrors, the roof wings have to be made out of sturdy material, which adds to the overall weight of the cab and the combine. The roof further has a variety of complex cab systems which need to be installed after the roof is place on the cab. This places the assembler in the awkward position of installing equipment into the ceiling while standing in the cab. This increases the time, complexity and expense of construction. Furthermore, it is difficult to remove and attach the cab during assembly.

US-A-4,660,462 discloses a ventilation system and filter. Again, the complexity HVAC system increases the time and cost to install the system. The blowers located in the roof of the cab will require that the assembler wait until after the roof is attached to the cab before starting to work. Further maintenance is accomplished from the top of the cab roof.

Consequently, the need exists for a cab roof which is easy to assemble and which allows a worker to build the roof at a 'workbench' level instead of standing in a vehicle cab or on ladders outside the cab.

According to the invention there is provided an agricultural harvester comprising a crop processing means and an operator's cab provided with a cab roof which comprises an outer roof and an inner roof affixed to and within said outer roof, said roof comprising a left flood wing and a right flood wing, each wing extending away from the cab and comprising a plurality of light pockets containing a light, characterized in that said roof further comprises a mirror support bar extending through the left flood wing and the right flood wing, said support bar having a pair of opposing mirror supports and mirrors, whereby the mirror support bar provides support to the flood wings and dampens motion to said flood wings.

Besides providing support for the lights, the flood wings also shield the cab from the sun.

The inner roof and the outer roof may constitute a pre-assembly, separate from the remainder of the cab, thereby providing a combine cab roof which allows an assembler or maintenance worker to reach equipment either at a workbench level or easily from within the cab.

The inner roof may comprise a front headliner and a rear headliner facilitating access to the components below the upper roof from the inside of the cab, e.g. for service purposes. This arrangement minimizes the need for removal of the roof from the cab so as to extend the life of the seal between the roof and the cab frame.

The components may be related to various electrical, HVAC and communications systems which now can be maintained from inside the cab.

Preferably the headliner has attached thereto ducts for the conditioned air from a HVAC unit. Preferably two or more ducts are used for minimizing the turbulence needed to circulate air.

Advantageously the cab roof has a fresh air inlet located at the side of the cab to limit the amount of dirty air entering the HVAC system.

The light pockets should be able to receive therein different light fixtures for use on the road and the viewing of farm operations. Such light may also be a high intensity discharge light for which a transformer may be provided in a dedicated area in a flood wing.

The complete roof may be attached to the posts of the cab by a set of bolts which can be replaced with special removal bolts which enable the installation and removal of the entire cab from the harvester.

A cab roof for an agricultural harvester according to the invention will now be described in further detail, with reference to the following drawings wherein:
Figure 1 is a side elevational view of an agricultural combine harvester;
Figure 2 is a plan view of the cab taken on line 2-2 of Figure 1, said cab comprising an inner roof, a headliner and an outer roof;
Figure 3 is an exploded view of the headliner and inner roof with the outer roof removed;
Figure 4 is an enlarged sectional view through the assembled cab roof taken on line 4-4 of Figure 2; and
Figure 5 is an enlarged sectional view through the left flood wing taken on line 5-5 of Figure 2.

Referring to the drawings, it is possible to observe the major elements and general operation of the present invention. Left and right references are used as a matter of convenience and are determined by standing at the rear of the combine harvester and facing the forward end in the normal direction of travel. Likewise, forward and rearward are determined by normal direction of travel of the harvester. Upward or downward orientations are relative to the ground or operating surface. Horizontal or vertical planes are also relative to ground.

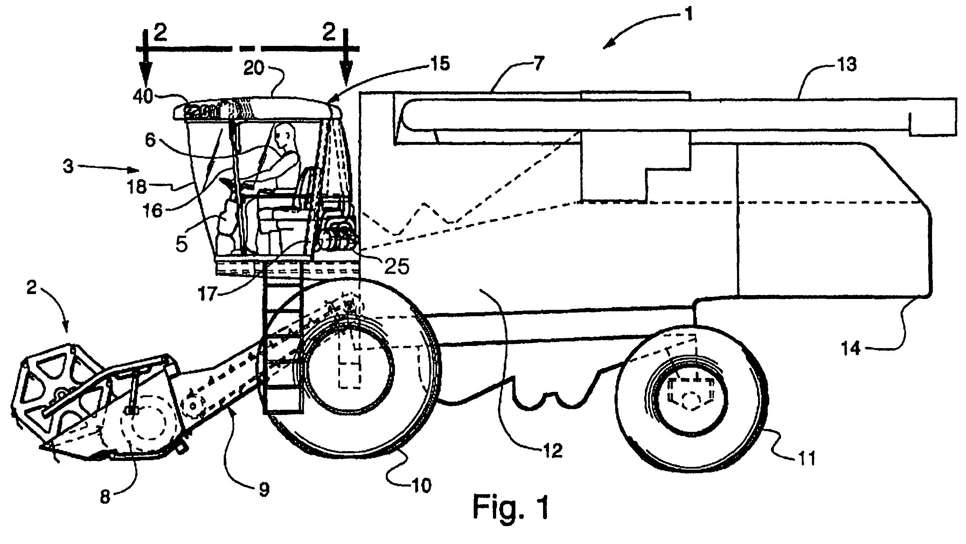

Figure 1 illustrates a conventional combine harvester 1 having a pair of front wheels 10 (only one shown) and a pair of steerable rear wheels 11 (only one shown) for providing movement over the ground. At the front of the combine harvester is a header 2 for cutting a crop. As the combine harvester 1 and the header 2 are moved forward, the grain and stalk are cut by the header. The header 2 moves the grain into an auger trough. A transverse auger 8 pushes the grain and stalk in the auger trough to the center of the header. Located at the center of the header 2 is the feeder house 9 or elevator. The feeder house 9 moves the grain and stalks rearward into the threshing and separation systems 12 of the combine harvester. After processing and separation, the processed grain is stored in a grain tank 7 located in the upper part of the combine harvester. The grain is removed from the grain tank by an unloading auger 13. The trash or chaff is ejected from the rear 14 of the combine harvester. The operator 6 runs the combine harvester 1 from the cab 3 located at the front of the combine harvester, behind the header 2. From the cab the operator can observe most of the various combine harvester functions. The cab 3 usually has a large glass window or several windows which afford the operator 6 the maximum visibility to monitor the header 2. Located in the center of the cab 3 is the steering column 5. Behind the steering column 5 is an operator's chair. A cab roof 15 covers the cab 3.

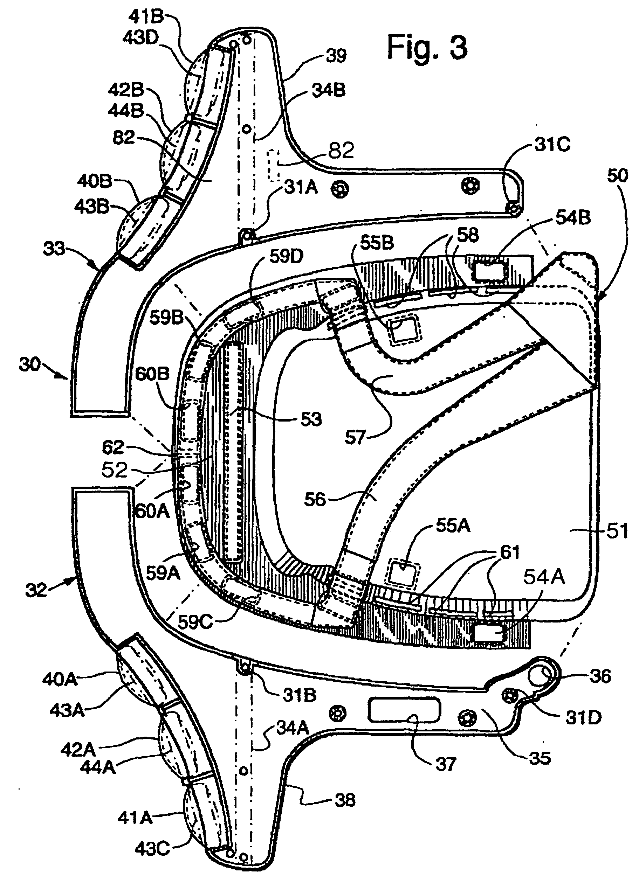

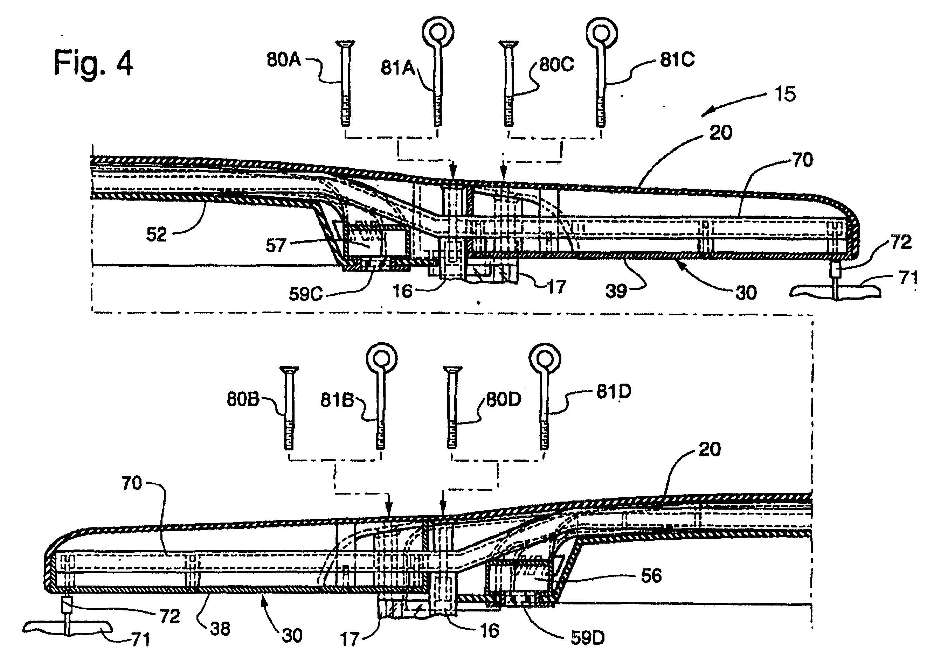

The cab roof 15 generally comprises an outer roof 20 and an inner roof 30 (Figure 4). The inner roof has a left flood wing 38, right flood wing 39 and a headliner 50 (Figure 3). Several light fixtures 43 or 44 are located within the flood wings 38 or 39. Rear view mirrors 71 are also affixed to the roof 15.

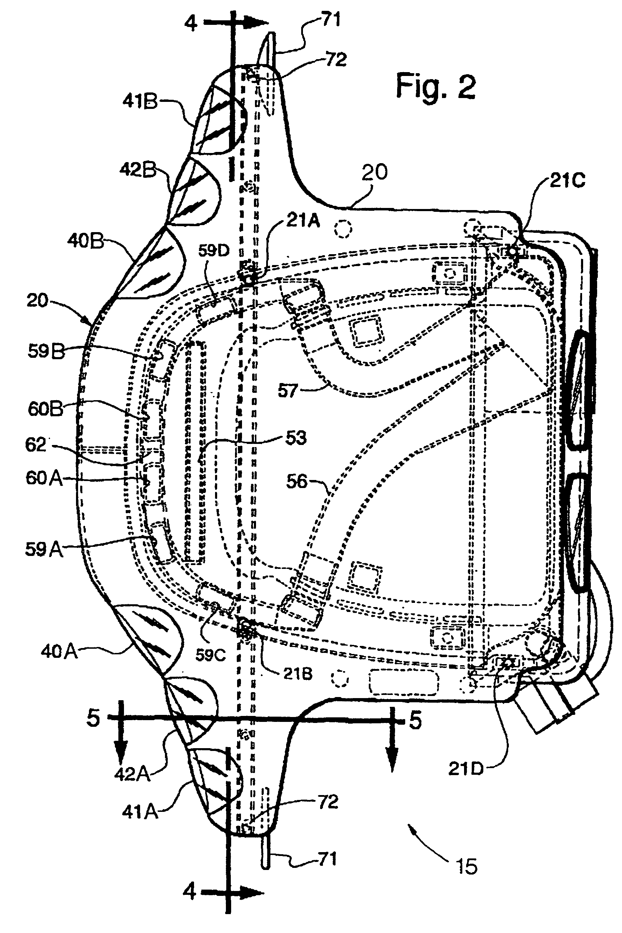

The outer roof 20, as seen in Figure 2, is generally contoured to match the shape of the cab 3. There are four outer bolt apertures 21A, 21B, 21C and 21D in the roof 20. These outer bolt apertures align with the cab posts 16, 17. Outer bolt apertures 21A and 21B align with the front cab or cab 'A' posts 16. Outer bolt apertures 21C and 21D align with the rear cab or cab 'B' posts 17. Also visible in Figure 2 are the various light pockets 40, 41, and 42. These will be discussed in greater detail later. The outer roof 20 extends horizontally away from the cab windshields 18. This enables the roof to shade the cab glass from the sunlight. It is also possible to insert channels (not shown) on the outer roof 20 to drain rain water away from the cab.

The inner roof 30 can be seen in Figure 3 and in phantom in portions of Figure 2. There are three parts to the inner roof: the left inner roof 32, the right inner roof 33 and the headliner 50. All three parts 32, 33, 50 of the inner roof 30 are affixed to the outer roof 20 before the entire roof 15 is attached to the cab 3. This allows the assembler to work at 'bench level' instead of at the top of the cab 3.

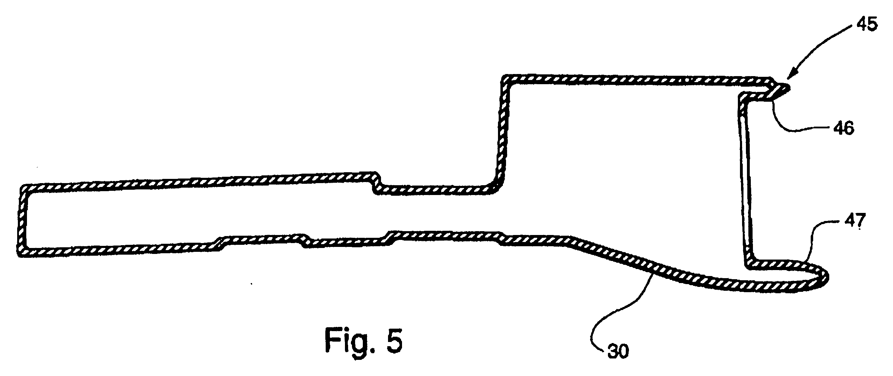

The left inner roof 32 has a left flood wing 38 and a fresh air duct 35. A quantity of fresh air enters the fresh air duct 35 through the fresh air inlet 37. The air then passes to the fresh air plenum 36. The air plenum 36 is a circular tube running vertically down the rear cab wall and connecting the fresh air duct 35 to the heat, ventilation and air conditioning (HVAC) system 25 (Figure 1). The fresh air inlet 37 is located on the side of the cab 3 near the cab door. This minimizes the amount of dust entering the HVAC system 25. Inlets located at the front of the roof are prone to receive more dust. The left flood wing 38 extends away from the cab and headliner. The left flood wing 38 has three light pockets: the inner light pocket 40A, the center light pocket 42A and the outer light pocket 41A. Each light pocket has a light fixture and a light shroud. The inner light pocket 40A and outer light pocket 41A have flood lights 43A and 43C. These flood lights are oriented such as to illuminate various working areas. The outer light pocket 41A and its flood light 43C illuminate the header 2 and the area immediately in front of the header. The inner light pocket 40A and its flood light 43A illuminate towards the outer edge of header 2. The center light pocket 42A has a distance light 44A, illuminating the region in front of the combine harvester 1. As illustrated in Figure 5, each light pocket contains a light shroud 45 having a top lip 46 and an elongated bottom lip 47. The elongated bottom lip 47 acts to prevent light from shining into the cab 3. The left inner roof 32 and its left flood wing 38 have a mirror support duct 34A containing the mirror support bar 70 (shown in Figure 4 and in phantom in Figure 2). The mirror support bar 70 has the mirror support 72 attached at the end of the bar 70. The mirror 71 is attached to the bar 70 by the mirror support 72. An alternative embodiment replaces the mirror support bar 70 with a region of reinforced fiber glass embedded into the outer roof 20. The mirror support bar 70 acts to restrain and dampen any motion in flood wing 39. As shown in Figure 3, the left inner roof 32 also has a pair of inner bolt apertures 31B and 31D which align with the outer bolt apertures 21B and 21D and the cab posts 16, 17. As illustrated in Figure 4, a bolt 80B or 80D is normally secured to the cab post 16 or 17. The bolt 80B or 80D can be replaced by a removal bolt 81B or 81D. The removal bolt is inserted into the cab roof 15 and cab posts 16, 17. This permits the cab 3 to be easily lifted and moved.

The right inner roof 33 is largely identical to the left inner roof 32 and its left flood wing 38. The major difference between these two sections is the lack of a fresh air duct 35 in the right inner roof 33. The right inner roof 33 also has a region into which a high intensity discharge lighting (HIDL) transformer 82 can be placed. In the event that a user decides to use this form of lighting in both the left and right flood wings 38, 39, the transformer 82 can be placed in this region. Presently, the right inner roof 33 has the same light pockets (inner 40B, center 42B and outer 41B) as the left inner roof 32. The flood light fixtures 43 are located in the inner light pocket 40B and the outer light pocket 41B, respectively. The right inner roof 33 also has a mirror support duct 34B and inner bolt apertures 31A and 31C.

Between the left inner roof 32 and right inner roof 33 is the headliner 50. The headliner 50 consists of a front headliner 52 and a rear headliner 51. The front headliner 52 and the rear headliner 51 form a rectangular visor opening 53. The rear headliner 51 has a molded right conditioned air duct 57 and molded left conditioned air duct 56 glued to the headliner and positioned between the headliner and outer roof 20. Unlike conventional conditioned air ducting, the present invention does not deposit all of the conditioned air into a single plenum for distribution. Instead, the present invention possesses two ducts 56, 57 by which the conditioned air may be channeled in the cab. It is advantageous to allow for several ducts instead of a single plenum with several vents because it minimizes the turbulence of the conditioned air caused by the volume of a large single plenum. Less air turbulence results in less energy needed to distribute the conditioned air to the cab. The left conditioned air duct 56 delivers a quantity of conditioned air to two side windshield vents 59A and 59C and to a front windshield vent 60A. Similarly, the right conditioned air duct 57 delivers a quantity of conditioned air to two side windshield vents 59B and 59D and to a front windshield vent 60B. A divider 62 is positioned between the two front vents 60A and 60B. The rear headliner 51 also has several additional openings for various equipment and lights. There are openings for the dome lights 55A and 55B and ambient lights 54A and 54B. There are further openings for the communication controls 61 and the electrical controls 58. It is also possible to mold the condition air duct or ducts directly into the outer roof.

As indicated earlier, to assemble the combine cab roof 15, the outer roof 20 is placed at 'bench-level' and upside down. The inner roof 30 comprising the headliner 50, the left inner roof 32 and right inner roof 33 are affixed to the outer roof 20. Various components such as visor, vents, seals, lights, various communications devices and electrical controls are installed. Then, the roof 20 is flipped over and placed on the cab 3. The removal bolts 81 are inserted into the roof 15 and cab posts 16, 17. The entire cab 3 is lifted onto the combine harvester 1 by the removal bolts 81. Once the cab 3 is attached to the combine harvester 1, the removal bolts are replaced with conventional or countersunk bolts 80. The windshield wiper motor can be installed through the visor opening 53. Any periodic maintenance is accomplished from within the cab 3 minimizing the need to remove the cab roof 15. Constant removal of the cab roof could, over time, damage the seal between the roof and the cab 3. This could possibly allow averse elements into the cab.

It will be obvious to those skilled in the art that various changes may be made without departing from the scope of the invention as defined by the claims. For example this roof arrangement can also advantageously be used on other types of self-propelled harvesting equipment such as windrowers or forage harvesters.

## Claims

1. An agricultural harvester (1) comprising a crop processing means (12) and an operator's cab (3) provided with a cab roof (15) which comprises an outer roof (20) and an inner roof (30) affixed to and within said outer roof (20), said roof (15) comprising a left flood wing (38) and a right flood wing (39), each wing (38, 39) extending away from the cab (3) and comprising a plurality of light pockets (40-42) containing a light
**characterized in that** said roof (15) further comprises a mirror support bar (70) extending through the left flood wing (38) and the right flood wing (39), said support bar (70) having a pair of opposing mirror supports (72) and mirrors (71), whereby the mirror support bar (70) provides support to the flood wings (38, 39) and dampens motion to said flood wings (38, 39).

2. An agricultural harvester according to claim 1, **characterized in that** said inner roof (30) is constituted by a headliner (50), a left inner roof (32), a right inner roof (33) and a headliner (50), mounted between said left inner roof (32) and said right inner roof (33),
said left inner roof (32) comprising said left flood wing (38) and said right inner roof (33) comprising said right flood wing (39).

3. An agricultural harvester according to claim 2, **characterized in that** the left inner roof (32) or the right inner roof (33) has a fresh air inlet (37) and a fresh air duct (35) for thereby receiving a quantity of fresh air into the cab (3), said fresh air inlet (37) being positioned at a side of said cab (3).

4. An agricultural harvester according to any of the preceding claims, **characterized in that** said left and right flood wings (38, 39) each have an inner light pocket (40), an outer light pocket (41) and a center light pocket (42), each light pocket containing a light fixture (43/44) and a light.

5. An agricultural harvester according to claim 4, **characterized in that** said inner light pocket (40) contains a flood light fixture (43), said center light pocket (42) contains a distance light fixture (44) and said outer light pocket (41) contains a flood light fixture (43).

6. An agricultural harvester according to any of the preceding claims, **characterized in that** each light pocket (40-42) has a light blocking shroud (45) comprising a top lip (46) and an elongated bottom lip (47), whereby a quantity of light emitted from the light pocket (40-42) is blocked by said elongated bottom lip (47).

7. An agricultural harvester according to any of the preceding claims, **characterized in that**:
said inner roof (30) comprises a headliner (50), constituted by a front headliner (52) and a rear headliner (51);
said front headliner (52) has a molded left conditioned air duct (56) and a molded right conditioned air duct (57); and
said ducts (56, 57) are positioned between the front headliner (52) and the outer roof (20) and are operable to provide a quantity of conditioned air to a side windshield vent (59) and to a front windshield vent (60) incorporated into said front headliner (52).

8. An agricultural harvester according to claim 7, **characterized in that** said headliner (50) comprises an ambient light opening (54) therein, a dome light opening (55) therein, an electrical control opening (58) therein, and a communication opening (61) therein.

9. An agricultural harvester according to any of the preceding claims, **characterized in that** it comprises a high intensity discharge light transformer (82) installed in a dedicated area in one of the flood wings (38/39).

10. An agricultural harvester according to any of the preceding claims, **characterized in that**:
said cab (3) comprises a pair of front cab posts (16) and a pair of rear cab posts (17);
said inner roof (30) and said outer roof (20) constitute a pre-assembly (15); and
said pre-assembly (15) is affixed to said pair of front cab posts (16) and said pair of rear cab posts (17).

11. An agricultural harvester according to claim 10, **characterized in that** said pre-assembly (15) is affixed to said cab posts (16, 17) by threaded bolt means (80), which can be replaced by removal bolt means (81), enabling installation and removal of the entire cab (3) from the harvester (1).

## Patentansprüche

1. Landwirtschaftliche Erntemaschine (1) mit einer Emtegut-Verarbeitungseinrichtung (12) und einer Fahrerkabine (3), die mit einem Kabinendach (5) versehen ist, das ein äußeres Dach (20) und ein inneres Dach (30) umfasst, das an dem äußeren Dach (20) und in diesem befestigt ist, wobei das Dach (15) einen linken Flutflügel (38) und einen rechten Flutflügel (39) umfasst, wobei sich jeder Flügel (38, 39) von der Kabine (3) fort erstreckt und eine Anzahl von Lampentaschen (40-42) umfasst, die eine Lampe enthalten,
**dadurch gekennzeichnet, dass** das Dach (15) weiterhin eine Spiegelhaltestange (70) aufweist, die sich durch den linken Flutflügel (38) und den rechten Flutflügel (39) erstreckt, dass die Haltestange (70) ein Paar von entgegengesetzt angeordneten Spiegelhalterungen (72) und Spiegel (71) aufweist, wobei die Spiegelhaltestange (70) eine Halterung für die Flutflügel (38, 39) ergibt und die Bewegung der Flutflügel (38, 39) dämpft.

2. Landwirtschaftliche Erntemaschine nach Anspruch 1, **dadurch gekennzeichnet, dass** das innere Dach (30) durch ein linkes inneres Dach (32), ein rechtes inneres Dach (33) und eine Verkleidung (50) gebildet ist, die zwischen dem linken inneren Dach (32) und dem rechten inneren Dach (33) befestigt ist, wobei das linke innere Dach (32) den linken Flutflügel (38) umfasst, und das rechte innere Dach (33) den rechten Flutflügel (39) umfasst.

3. Landwirtschaftliche Erntemaschine nach Anspruch 2, **dadurch gekennzeichnet, dass** das linke innere Dach (32) oder das rechte innere Dach (33) einen Frischlufteinlass (37) und einen Frischluftkanal (35) aufweist, um hierdurch eine Menge an Frischluft in die Kabine (3) aufzunehmen, wobei der Frischlufteinlass (37) an einer Seite der Kabine (3) angeordnet ist.

4. Landwirtschaftliche Erntemaschine nach einem der vorhergehenden Ansprüche, **dadurch gekennzeichnet, dass** die linken und rechten Flutflügel (38, 39) jeweils eine innere Lampentasche (40), eine äußere Lampentasche (31) und eine mittlere Lampentasche (42) aufweisen, wobei jede Lampentasche eine Lampenfassung (43/44) und eine Lampe enthält.

5. Landwirtschaftliche Erntemaschine nach Anspruch 4, **dadurch gekennzeichnet, dass** die innere Lampentasche (40) eine Flutlicht-Lampenfassung (43) enthält, dass die mittlere Lampentasche (42) eine Fernlicht-Lampenfassung (44) enthält, und dass die äußere Lampentasche (41) eine Flutlicht-Lampenfassung (43) enthält.

6. Landwirtschaftliche Erntemaschine nach einem der vorhergehenden Ansprüche, **dadurch gekennzeichnet, dass** jede Lampentasche (40-42) eine Lichtabsperrummantelung (45) aufweist, die eine obere Lippe (46) und eine langgestreckte untere Lippe (47) umfasst, wodurch eine Menge des von der Lampentasche (40-42) ausgesandten Lichtes durch die langgestreckte untere Lippe (47) abgesperrt wird.

7. Landwirtschaftliche Erntemaschine nach einem der vorhergehenden Ansprüche, **dadurch gekennzeichnet, dass**:
das innere Dach (30) eine Verkleidung (50) umfasst, die durch eine vordere Verkleidung (52) und eine hintere Verkleidung (51) gebildet ist,
die vordere Verkleidung (52) einen angeformten linken Klimaluft-Kanal (56) und einen angeformten rechten Klimaluft-Kanal (57) aufweist; und
die Kanäle (56, 57) zwischen der vorderen Verkleidung (52) und dem äußeren Dach (20) angeordnet und betreibbar sind, um eine Menge der klimatisierten Luft an eine seitliche Windschutzscheiben-Düse (59) und eine vordere Windschutzscheiben-Düse (60) zu liefern, die in die vordere Verkleidung (52) eingefügt ist.

8. Landwirtschaftliche Erntemaschine nach Anspruch 7, **dadurch gekennzeichnet, dass** die Verkleidung (50) eine darin ausgebildete Umgebungslicht-Öffnung (54), eine darin ausgebildete Deckenlicht-Öffnung (55), eine darin ausgebildete elektrische Steueröffnung (58) und eine darin ausgebildete Kommunikations-Öffnung (61) umfasst.

9. Landwirtschaftliche Erntemaschine nach einem der vorhergehenden Ansprüche, **dadurch gekennzeichnet, dass** sie einen Hochintensitäts-Entladungslampen-Transformator (82) umfasst, der in einem hierfür bestimmten Bereich in einem der Flutflügel (38/39) angeordnet ist.

10. Landwirtschaftliche Erntemaschine nach einem der vorhergehenden Ansprüche, **dadurch gekennzeichnet, dass**:
die Kabine (3) ein Paar von vorderen Kabinensäulen (16) und ein Paar von hinteren Kabinensäulen (17) umfasst;
dass das innere Dach (30) und das äußere Dach (20) eine vorgefertigte Baugruppe (15) bilden; und
die vorgefertigte Baugruppe (15) an dem Paar von vorderen Kabinensäulen (16) und dem Paar von hinteren Kabinensäulen (17) befestigt ist.

11. Landwirtschaftliche Erntemaschine nach Anspruch 10, **dadurch gekennzeichnet, dass** die vorgefertigte Baugruppe (15) an den Kabinensäulen (16, 17) durch Gewindeschraubeneinrichtungen (80) befestigt ist, die durch Abbau-Schraubeneinrichtungen (81) ersetzt werden können, die den Einbau und die Entfernung der gesamten Kabine (3) von der Erntemaschine (1) ermöglichen.

## Revendications

1. Moissonneuse agricole (1) comprenant un moyen (12) de traitement de matériau de récolte et une cabine d'opérateur (3), pourvue d'un toit de cabine (15) qui comprend un toit extérieur (20) et un toit intérieur (30) fixés sur et dans ledit toit extérieur (20), ledit toit (15) comprenant une aile gauche (38) et une aile droite (39) d'éclairage, chaque aile (38, 39) se prolongeant en s'écartant de la cabine (3) et comprenant une pluralité d'évidements d'éclairage (40-42) contenant un phare,
**caractérisée en ce que** ledit toit (15) comprend en outre une barre de support (70) de rétroviseur s'étendant à travers les ailes gauche (38) et droite (39) d'éclairage, ladite barre de support (70) disposant d'une paire de supports (72) de rétroviseurs opposés et de rétroviseurs (71), de telle sorte que la barre de support (70) de rétroviseur supporte les ailes d'éclairage (38, 39) et amortisse le mouvement desdites ailes d'éclairage (38, 39).

2. Moissonneuse agricole selon la revendication 1, **caractérisée en ce que** ledit toit intérieur (30) est constitué par un revêtement intérieur (50), un toit intérieur gauche (32), un toit intérieur droit (33) et un revêtement intérieur (50), montés entre ledit toit intérieur gauche (32) et ledit toit intérieur droit (33),
ledit toit intérieur gauche (32) comprenant ladite aile gauche d'éclairage (38) et ledit toit intérieur droit (33) comprenant ladite aile droite d'éclairage (39).

3. Moissonneuse agricole selon la revendication 2, **caractérisée en ce que** le toit intérieur gauche (32) ou le toit intérieur droit (33) est pourvu d'une admission d'air frais (37) et d'un conduit d'air frais (35) pour accueillir une quantité d'air frais dans la cabine (3), ladite admission d'air frais (37) étant positionnée d'un côté de ladite cabine (3).

4. Moissonneuse agricole selon l'une quelconque des revendications précédentes, **caractérisée en ce que** lesdites ailes gauche et droite d'éclairage (38, 39) possèdent chacune un évidement intérieur d'éclairage (40), un évidement extérieur d'éclairage (41) et un évidement central d'éclairage (42), chaque évidement d'éclairage contenant une armature de phare (43/44) et un phare.

5. Moissonneuse agricole selon la revendication 4, **caractérisée en ce que** ledit évidement intérieur d'éclairage (40) contient une armature de phare (43), ledit évidement central d'éclairage (42) contient une armature de phare à longue portée (44) et ledit évidement extérieur d'éclairage (41) contient une armature de phare (43).

6. Moissonneuse agricole selon l'une quelconque des revendications précédentes, **caractérisée en ce que** chaque évidement d'éclairage (40-42) possède un abat-jour (45) comprenant une lèvre supérieure (46) et une lèvre inférieure allongée (47), de telle sorte qu'une quantité de lumière émise à partir de l'évidement d'éclairage (40-42) est bloquée par ladite lèvre inférieure allongée (47).

7. Moissonneuse agricole selon l'une quelconque des revendications précédentes, **caractérisée en ce que**:
ledit toit intérieur (30) comprend un revêtement intérieur (50), constitué par un revêtement intérieur avant (52) et un revêtement intérieur arrière (51);
ledit revêtement intérieur avant (52) possède un conduit moulé d'air conditionné gauche (56) et un conduit moulé d'air conditionné droit (57); et
lesdits conduits (56, 57) sont positionnés entre le revêtement intérieur avant (52) et le toit extérieur (20), et leur fonction est de fournir une quantité d'air conditionné à une sortie latérale de pare-brise (59) et à une sortie frontale de pare-brise (60), intégrées dans ledit revêtement intérieur avant (52).

8. Moissonneuse agricole selon la revendication 7, **caractérisée en ce que** ledit revêtement intérieur (50) comprend une ouverture d'éclairage d'ambiance (54), une ouverture de plafonnier (55), une ouverture de commande électrique (58), et une ouverture de communication (61).

9. Moissonneuse agricole selon l'une quelconque des revendications précédentes, **caractérisée en ce qu'**elle comprend un transformateur d'éclairage à haute intensité à décharge (82) installé dans une zone spécifique dans l'une des ailes d'éclairage (38/39).

10. Moissonneuse agricole selon l'une quelconque des revendications précédentes, **caractérisée en ce que**:
ladite cabine (3) comprend une paire de montants avant de cabine (16) et une paire de montants arrière de cabine (17);
ledit toit intérieur (30) et ledit toit extérieur (20) constituent un pré-assemblage (15); et
ledit pré-assemblage (15) est fixé à ladite paire de montants avant de cabine (16) et à ladite paire de montants arrière de cabine (17).

11. Moissonneuse agricole selon la revendication 10, **caractérisée en ce que** ledit pré-assemblage (15) est fixé auxdits montants de cabine (16, 17) avec des boulons filetés (80), pouvant être remplacés par des boulons d'enlèvement (81), permettant d'installer et de retirer toute la cabine (3) de la moissonneuse (1).
